# EUROPEAN PATENT SPECIFICATION

(11) **EP 2 347 451 B1**
(45) Date of publication and mention of the grant of the patent: **11.05.2016**
(21) Application number: 09783988.0
(22) Date of filing: 13.10.2009
(51) Int. Cl.: B32B 17/10, H01R 13/11, H01R 13/52, H01R 13/66, H02S 40/34

(54) **CONNECTING DEVICE FOR CONNECTING AN ELECTRICAL CONDUCTOR TO A SOLAR MODULE**
VERBINDUNGSEINRICHTUNG ZUM VERBINDEN EINES ELEKTRISCHEN LEITERS MIT EINEM SOLARMODUL
DISPOSITIF DE CONNEXION POUR CONNECTER UN CONDUCTEUR ÉLECTRIQUE À UN MODULE SOLAIRE

(30) Priority: 20.10.2008 DE 102008052348
(43) Date of publication of application: 27.07.2011
(73) Proprietor: TE Connectivity Germany GmbH, 64625 Bensheim (DE)
(72) Inventor: FELDMEIER, Guenter, 64653 Lorsch (DE); GEISTER, Norbert, 76865 Insheim (DE); SCHAARSCHMIDT, Manfred, 64625 Lauteral (DE); SCHERER, Heinz, Peter, 64625 Bensheim (DE); WOEBER, Andreas, 64293 Darmstadt (DE)
(74) Representative: Klunker, Hans-Friedrich
(86) International application number: PCT/EP2009/063362
(87) International publication number: WO 2010/046282

(56) References cited:
- EP-A- 0 999 601
- JP-A- 2004 063 651
- JP-A- 2007 311 714
- US-A- 4 460 232
- US-A1- 2005 054 244
- US-A1- 2006 283 628

## Description

The present invention relates to a connecting device for connecting at least one external electrical conductor to an electrical connection system of a photovoltaic solar module, having a connector housing for arrangement on the solar module and having busbars arranged in the connector housing. In addition, the invention relates to a solar module having such a connecting device and to a method for producing such a connecting device

A photovoltaic solar module typically comprises a panel-type multilayer arrangement with solar cells arranged therebetween, which generate electricity through a photovoltaic effect. For example, a multilayer arrangement of such a solar module comprises a flat layer on the side exposed to light for instance in the form of a glass cover with low absorptivity and a flat second layer, which is arranged on the back of the solar module and takes the form for example of a rear glass cover. The solar cells are arranged in a corresponding space between these layers and are interconnected within the multilayer arrangement with an electrical connection system. Embodiments of solar modules are known, in which the electrical connection system of the solar cells on the rear of the solar module remote from the light-exposed side is connected on the outside by means of electrical conductors, for example in the form of connecting foils, for example to a consumer. These connecting foils are connected in a connecting device, for example in the form of a terminal box or a junction box, to one or more electrical conductors of a connecting lead, or "solar connecting lead". To this end, such a connecting device comprises a current-carrying arrangement disposed in a connector housing, to which are connected, on the one hand, one or more connecting foils of the solar module and, on the other hand, one or more electrical conductors of one or more connecting cables. In addition, one or more diodes are generally contained in such a connecting device, which diodes are provided in order to prevent circulating currents between sunlight-exposed solar cells and shaded solar cells, which supply different solar currents and solar voltages. By means of such "bypass diodes", it is possible to continue operating the module even when it is partially shaded and with corresponding reduced power.

A connection device for connecting external connecting cables to a solar panel is known for example from JP 2004 134 717 A. The connection device described therein comprises a printed circuit board, on which a plurality of conductor tracks are arranged, in order to connect an electrical connection system of a solar panel to a respective connecting cable. Furthermore, a plurality of diode components are mounted on the printed circuit board, which in each case connect two of the conductor tracks together. The connecting cables to be connected to the printed circuit board are in each case arranged on one of the conductor tracks applied to the printed circuit board and connected thereto, before a housing is mounted on the arrangement formed in this way and connected to the solar panel. The housing has a housing edge surrounding it, which is placed onto the solar module. A cavity formed between printed circuit board and housing is then filled with a potting material. The above-described connection device has the disadvantage that a main body in the form of a printed circuit board is needed, on which the respective diodes are positioned with bent diode leads. In this way, a current-carrying arrangement is obtained in the housing which is comparatively inflexible to handle and which it is difficult or impossible to adapt to different requirements, such as for example to a different number of solar module solar cells to be connected.

EP 0 999 601 A1 describes a comparable connection device, in which, however, a plurality of bypass diodes are connected in the upper housing to corresponding terminals, before the housing is fitted with its bottom opening over a lower connection arrangement on the solar panel, at which the individual conductors of the solar module lead out and are connected to corresponding terminals. On application of the upper housing, the terminals thereof are connected to respective terminals of the lower connection arrangement. In the event of a defect in one of the bypass diodes, the connection device is repaired by replacing the entire upper housing.

JP 2004 063651 A discloses a terminal box for a solar battery panel with features according to the preamble of claim 1.

It is an object of the present invention to provide a connecting device of the above-mentioned type which is comparatively simple and inexpensive to produce using the simplest possible components and provides improved heat dissipation.

The invention relates to a connecting device for connecting at least one external electrical conductor to an electrical connection system of a photovoltaic solar module according to the features of claim 1. In addition, the invention relates to a solar module having such a connecting device according to the features of claim 12.

A connecting device, which is designed for the connection of at least one external electrical conductor, for example of an external connecting cable, to an electrical connection system of a photovoltaic solar module, comprises a plurality of individually assembled busbars arranged next to one another. The busbars comprise at least a first busbar with a first contact zone for connection to the electrical conductor and a second contact zone for connection to the electrical conductor and a second contact zone for connection to the electrical connection system of the solar module, and a second busbar with a contact zone for connection to the electrical connection system of the solar module. Furthermore at least one support element is provided, to which the busbars are attached, the support element comprising a bottom face by means of which the support element may be arranged on the solar module by being placed thereon. In addition, a separately assembled overhousing is provided, which may be arranged over the support element and the busbars and comprises at least one edge surrounding the support element and the busbars in this position, which may be arranged on the solar module by being placed thereon and may be sealingly connected to the solar module. A diode component fitted onto the busbars and having diode leads may further be provided, which diode leads are in each case fitted onto one of the busbars and connected to the respective busbar, such that the first and second busbars are connected together via the diode component. At least one contact is configured in a first zone for connection with the first contact zone of the first busbar and in a second zone for connection with the external electrical conductor.

The invention thus offers the advantage that it is possible with such a connecting device to achieve a marked reduction in costs relative to conventional connecting devices. This is achieved in particular in that the connecting device according to the invention results in smaller dimensions and consequent savings in material. In addition, it is possible to use fewer and nevertheless simpler components, resulting, moreover, in the maximum possible level of automation in parts manufacture and assembly. The invention additionally makes it possible for a handling method modified from previously known methods to be performed automatically on the premises of the user of the connecting device.

In particular, the invention allows the use of substantially identically configured busbars, which are individually assembled in an appropriate number as required and needed. The busbars may for example be stamped from a corresponding metal source or otherwise produced and bent appropriately as required, in order to produce the respective contact zones. Depending on the number of solar cells to be connected or solar cell strings to be connected, a corresponding number of busbars may be used. In this way, the connecting device may be flexibly adapted to different requirements.

In a first variant of the invention, the busbars are attached individually to a support element, by placing them for example onto the support element. The arrangement thus formed of support element and busbars is connected to one or more diode components as required, by connecting respective diode leads of a diode component to a respective busbar. In this way, a functional unit is obtained consisting of a support element, busbars and one or more diode components, which may be placed onto a solar module by way of a bottom face of the support element. To complete the connecting device, an overhousing is then arranged over the support element and the busbars, the edge of the overhousing, which surrounds the support element and the busbars, being placed on the solar module and connected in a peripherally sealed manner to the solar module. This may proceed for example by using a suitable adhesive or sealant, which is suitable for sealing the interior of the overhousing with regard to external environmental influences.

In one embodiment of the invention the contact provided in the connecting device, with which contact the first busbar is connected with the external electrical conductor, is held in the overhousing. This contact is connected to a corresponding mating contact on the first busbar when the overhousing is placed onto the functional unit.

The contact takes the form, for example, of part of a plug-and-socket connection, which is arranged between the first busbar and the external electrical conductor. In particular, the contact may be part of a plug-and-socket device, which is arranged on a connection bushing of the overhousing, in order to cooperate with a corresponding plug-and-socket device on the external electrical conductor. For connection with the contact, the first busbar may comprise a mating contact in the first contact zone or be connected with such a mating contact, which is in operative connection with the contact in order to connect the external electrical conductor to the first busbar.

To attach the busbars individually to the support element, according to one embodiment of the invention at least one locking element is provided on the support element, in order to fix one or more of the busbars to the support element after assembly thereof on the support element.

According to a further aspect of the present invention, the support element is formed of a plastics housing, which encloses at least part of the busbars and at least one diode component, which connects two busbars together electrically, so forming a functional unit. For example, at least part of the busbars and the diode component are encapsulated in a plastics housing by injection moulding or potting. Encapsulating the current-carrying components by injection moulding in a plastics housing, which is moulded as a block for example, gives rise to improved dissipation of the heat arising in the diodes, such that the heat arising overall may be better dissipated towards the outside of the connecting device.

This improved heat dissipation may be additionally promoted by providing the plastics housing with at least one well or raised portion, which comes into contact respectively with a corresponding raised portion or well on the inside of the overhousing. In particular, the well or raised portion is formed on the plastics housing in such a way that heat developed within the plastics housing is at least partly dissipated via the well or raised portion on the plastics housing to the corresponding raised portion or well on the overhousing. The well or raised portion on the plastics housing may as far as possible be provided in the vicinity of the heat source and takes the form, for example, of a funnel or the like. In this way, the housing surface of the plastics housing is also enlarged, whereby the quantity of heat dissipated by the plastics housing may be increased. The wells, for example in the form of funnels, in the plastics housing or the corresponding raised portions may also assume a guiding and centring function upon final assembly of the connecting device, to the effect that they allow perfectly fitting serving up and fastening of the overhousing relative to the support element, such that functional unit and overhousing are correctly oriented one relative to the other.

In a further embodiment of the invention, at least one diode component is arranged in such a way that the diode leads thereof lead substantially straight out of the diode component and are connected to the respective busbar in accordance with their length. In this way, it is possible for the respective diode leads no longer to have to be bent, but rather they may be placed for example onto the busbars in the course in which they have been led straight out of the diode component and welded, crimped or otherwise connected to the respective busbar. It is thus possible to counter the risk of damage to diode components, since the diode leads led out of the diode component no longer have to be bent in order to be connected to the respective busbar.

For example, the respective diode component is arranged lengthwise across the busbars and arranged with its diode body between the respective busbars which connect the diode component together. In this case, the diode body may extend in a space-saving manner downwards and above the respective busbars. This is advantageous especially when the diode components take the form of respective round diodes.

In one embodiment of the invention, in which a plurality of diode components are provided, the latter are arranged next to one another in a row and are surrounded by a plastics housing, which lengthwise surrounds the diode components and extends across the busbars.

To position the support element on the solar module, provision may be made according to one embodiment of the invention for the support element to be provided on its bottom face facing the solar module with an adhesive component, such as for example a double-sided adhesive tape, which is designed to fix the support element to the solar module. The support element may thus be fixed to a certain degree to the solar module, before the overhousing is fitted over the support element, the fixing thereof to the solar module resulting in final fixing of the connecting device to the solar module.

In a further aspect of the invention, a method for producing such a connecting device comprises the following steps: Firstly, the first and second busbars and optionally further busbars are provided and attached to the support element. The support element is in turn attached to the solar module, by placing a bottom face of the support element onto the solar module. According to one embodiment of the invention, the busbars are firstly attached to the support element, before the bottom face of the support element is placed onto the solar module. Furthermore, two of the busbars are connected together as required by means of a respective diode component. This takes place, for example, after the busbars have been arranged on the support element.

In a further step, at least one part of the electrical connection system, for example one or more connecting foils of the solar module, are connected to at least one or more of the busbars. Furthermore, the overhousing is fitted over the support element and the busbars, at least an edge of the overhousing being placed on the solar module around the support element and the busbars and sealingly connected to the solar module. In addition, at least one contact arranged in the overhousing, which is designed for connection with the external electrical conductor, is connected to the first contact zone of the first busbar. In this way, a connection is produced between the first busbar and the external electrical conductor, for example in the form of a connecting cable, by means of the contact arranged in the connector housing.

According to a further aspect of the invention, a method for producing a connecting device comprises the following steps: After provision of at least a first and second busbar, as described above, these are connected together electrically by way of a diode component. Where more than two busbars are provided, in each case two of the busbars are connected together by way of a respective diode component. At least one support element is then formed in the form of a plastics housing, by enclosing at least part of the busbars and the diode component(s) in the plastics housing, so forming a functional unit. The support element is formed for example by encapsulating at least part of the busbars and of the diode component(s) with plastics material by injection moulding or potting, such that the relevant part of the busbars in the terminal zone of the diodes and the diode component(s) are surrounded by a common housing formed by the plastics material. In this way, a compactly arranged functional unit may be produced from electrically conductive parts of the connecting device.

The support element is then attached to the solar module, by placing a bottom face of the support element onto the solar module. Furthermore, at least part of the electrical connection system of the solar module, for example one or more connecting foils, is connected with at least one of the busbars. This may take place in principle before or after attachment of the support element to the solar module. Furthermore, an overhousing is fitted over the support element and the busbars, at least an edge of the overhousing being placed on the solar module around the support element and the busbars and sealingly connected to the solar module. In addition, at least one contact, which is designed for connection to the external electrical conductor, is connected to the first contact zone of the first busbar. This contact thus makes it possible to produce a connection between first busbar and a connecting cable.

For example, the contact is connected for this purpose to a mating contact, which is arranged on the first busbar or connected thereto. According to one embodiment, the contact is attached to the overhousing before the overhousing is placed onto the solar module. This has the advantage that the contact is connected to the corresponding mating contact when the overhousing is fitted on the solar module, such that in a joint movement the overhousing is placed on the solar module and the contact is connected to the mating contact.

On the external electrical conductor side, the contact may in turn be configured for plug-in connection with the external electrical conductor or with a corresponding plug-and-socket device on an external electrical conductor. In this case, an external connecting cable is for example connected to the contact by plug-and-socket connection merely by way of a corresponding connection bushing in the overhousing. In another variant, it is possible for the connecting cable already to be attached to the overhousing before the overhousing is placed on the solar module. In this case the contact has already been connected firmly with the electrical conductor of the external connecting cable before the overhousing is placed on the solar module. In a further variant, it is in turn possible for the contact to be attached to the external electrical conductor and for both components to be introduced together, once the overhousing has been placed on the solar module, into a corresponding connection bushing on the overhousing and connected to a corresponding mating contact on the first busbar.

These connection variants, as described above, are in principle independent of the type of embodiment of the support element as bearing element for the individual busbars or as a plastics block, which surrounds the busbars together with the diode components.

Further advantageous configurations and developments of the invention are stated in the subordinate claims.

The invention is explained in more detail below with reference to the Figures shown in the drawings, which illustrate exemplary embodiments of the present invention.
Figure 1 shows a schematic cross-sectional view of an exemplary photovoltaic solar module, which is connected to a connecting device according to the invention,
Figure 2 shows a schematic perspective representation of a first embodiment of a connecting device according to the invention,
Figure 3 shows a schematic exploded representation of the components of the first embodiment of a connecting device according to the invention as shown in Figure 2,
Figures 4 to 7 show embodiments of different components of a connecting device according to the invention in different stages of production of the connecting device according to Figure 2,
Figure 8 shows the underside of an embodiment of an overhousing, which is used in a connecting device according to Figure 2,
Figure 9 shows a schematic perspective representation of a second embodiment of a connecting device according to the invention,
Figure 10 shows a schematic exploded representation of a plurality of components of the connecting device according to Figure 9,
Figures 11 and 12 are schematic representations of a production variant, according to which a connecting cable is connected to the connecting device according to Figure 9,
Figure 13 is a schematic perspective representation of a third embodiment of a connecting device according to the invention,
Figure 14 shows a schematic exploded representation of the components used in a connecting device according to Figure 13,
Figures 15 to 18 show different stages of production and components for production of a connecting device according to Figure 13,
Figure 19 shows the underside of an embodiment of an overhousing, which is used to produce a connecting device according to Figure 13.

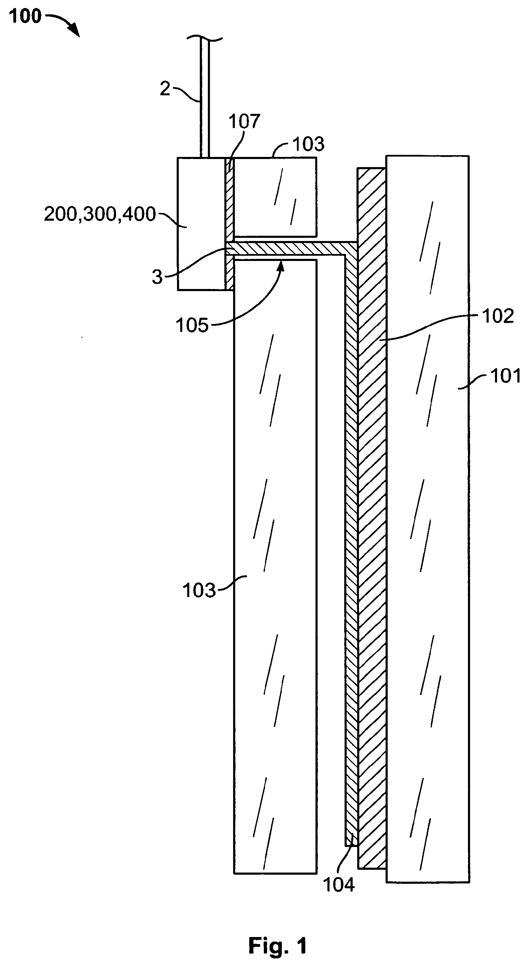

Fig. 1 is a schematic cross-sectional representation of a photovoltaic solar module, which is provided with a connecting device in the form of a junction box or connecting box. The solar module 100 comprises a multilayer arrangement with a flat first layer 101 on the light-exposed side, which may take the form of a glass sheet or a film-type layer. Furthermore, the solar module 100 comprises a flat second layer 103 remote from the light-exposed side, which may likewise take the form of a glass sheet or a film-type layer. In the present embodiment layers 101 and 103 take the form of respective glass sheets. Between the two layers 101 and 103 there is located at least one solar cell 102 or an arrangement of a plurality of solar cells 102, which supply electricity by means of a photovoltaic effect when exposed to light. The solar cell(s) 102 is/are connected to an electrical connection system 104. The latter is indicated purely schematically in Fig. 1 and serves in particular to interconnect the solar cell(s) electrically and to connect them to the outside world. The electrical connection system 104 comprises for example a copper foil, which is on the one hand electrically contacted with the back of the solar cell(s) 102 and on the other hand develops into one or more electrical conductors 3 of the solar module or is connected to at least one electrical conductor 3 of the solar module, which takes the form for example of a connecting foil or of a connecting tape. By means of such a foil conductor 3 the electrical connection system 104 of the solar module 100 may be connected to an external connecting lead 2, for example in the form of a solar connecting cable.

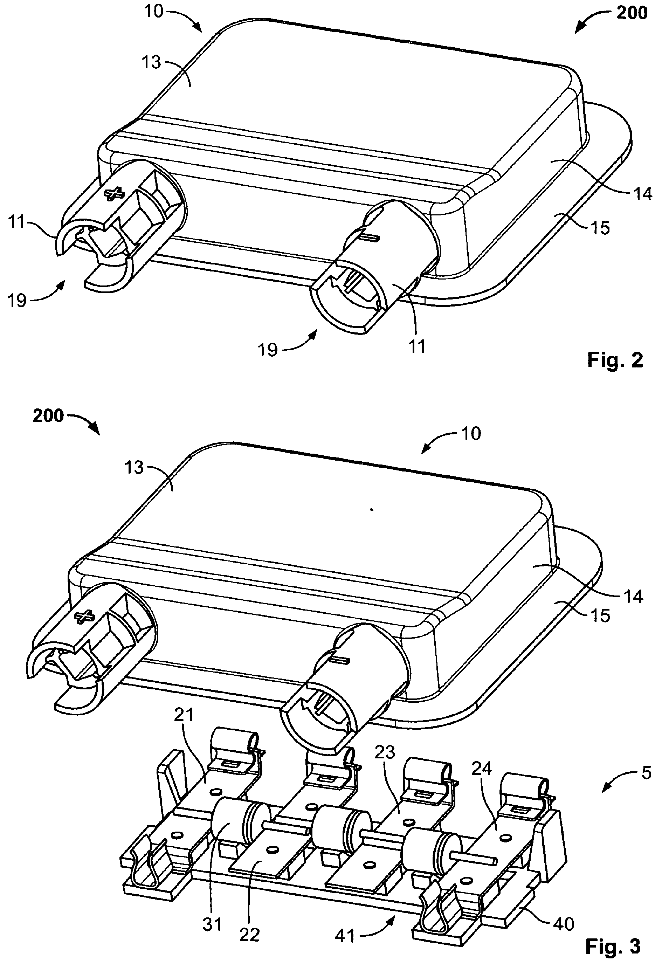

As is also illustrated in Fig. 1, a connecting device 200, 300 or 400, as explained below in more detail, is attached to the back of the layer 103, which forms an outer surface of the solar module, for example by adhesive bonding of a housing edge 15 or 65 (cf. Figures 2 to 19) by means of adhesive 107. Furthermore, the layer 103 comprises a lead-through opening 105, through which the electrical conductor 3, for instance in the form of a foil conductor may be passed to the connecting device.

Figure 2 shows a schematic perspective representation of an embodiment of a connecting device according to the invention in a first variant. The composition and individual components thereof become clear in particular when viewed together with Figure 3, which shows an exploded representation of this embodiment.

The connecting device 200 according to this embodiment is formed by two main components, namely by a functional unit 5 and an overhousing 10, which is fitted over the functional unit 5. To this end, the overhousing 10 comprises an edge 15 around it, which may be arranged on the solar module 100 by being placed thereon and may be sealingly connected to the solar module. For this purpose, the lower bearing surface of the edge 15 of the overhousing 10 has a substantially flat surface, which is suitable for placing on the likewise flat solar module 100 and may accordingly be area bonded. The surrounding edge 15 is connected by way of a vertical housing part 14, which forms the four side walls of the overhousing 10, to a plate-shaped horizontal housing part 13, which is arranged substantially parallel to the solar module when the overhousing 10 is fitted to the solar module. In one of the side walls of the vertical housing part 14, in Figures 2 and 3 in the side wall pointing to the front, two connection bushings 11 are here provided, which are provided with respective plug-and-socket connecting devices 19 for connecting the connecting cable 2 (not shown in Figures 2 and 3) to electrically conductive parts within the overhousing 10.

The functional unit 5 arranged in the overhousing 10 here comprises four busbars 21 to 24, as will be explained in greater detail below. The arrangement of the busbars 21 to 24 is here only to be regarded as an example and may also vary as required. In particular, the number of busbars used may vary as required. In the present case the outer two busbars 21 and 24 comprise a respective contact zone, which may be connected to an external conductor. The outer two busbars 21 and 24 may be connected to respective connecting cables 2 by way of the connection bushings 11 arranged on the overhousing 10. The two busbars 22 and 23 located in the middle are connected in their end regions merely with a corresponding foil conductor of the solar module connection system. In this context it is in principle possible for the busbars 21 and 24 and the connection bushings 11 to be arranged in the middle of the overhousing 10, while the busbars 22 and 23 may be arranged in the right- and left-hand peripheral areas of the overhousing 10. In a further embodiment it is possible, if needed and as required, for just two of the busbars 21 to 24 to be provided in the overhousing 10, to form a functional unit 5. The busbars 21 to 24 are held on a support element 40, which comprises a bottom face 41, by way of which the support element may be arranged on the solar module 100 by being placed thereon.

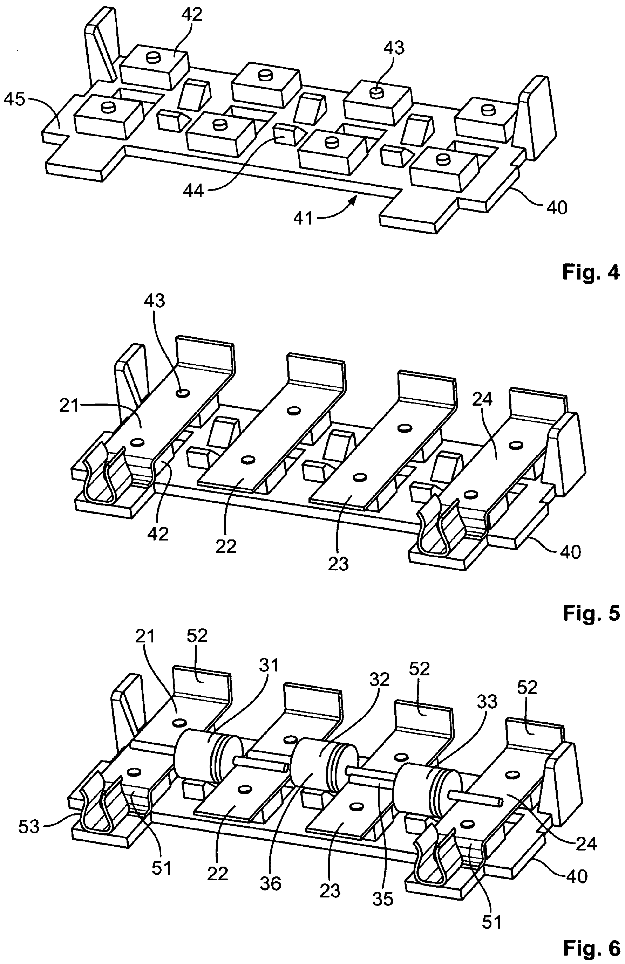

Production of a connecting device 200 according to the invention, as shown in Figure 2 in the form of an exemplary embodiment, will be explained in greater detail below with reference to Figures 4 to 7.

As is clear in greater detail from Figure 4, firstly a support element 40 is provided, which comprises a substantially flat bottom face 41, such that the support element 40 may be placed by way of the bottom face 41 on the solar module 100, which is likewise of substantially flat construction. On the support element 40 there are provided rests 42 for the busbars 21 to 24, and rests 44 for the diode components 31 to 33, which are connected to the busbars 21 to 24. The support element 40 is thus constructed in such a way that the individual busbars 21 to 24 may be placed in an individually assemblable manner on the support element. To this end, the busbars 21 to 24 are placed onto the respective rests 42 and may be fixed to the support element 40 by a respective locking element 43. One or more locking elements 43 per busbar may be provided for this purpose. The bottom face 41 is formed in the present case by the underside of a base plate 45, on which the rests 43 and 44 are arranged.

As is further described with reference to Figure 5, the current-carrying parts take the form of substantially identically and/or simply configured busbars 21 to 24, which have been shaped and optionally bent for example from a metal strip. These busbars 21 to 24 are assembled individually on the support element 40. To this end, explained for example with reference to the busbar 21, the latter is placed onto the corresponding rests 42 and locked by means of the locking element 43 in the front and rear areas of the busbar 21. The locking element 43 may take the form for example of a plastics lug or the like, which is softened by thermal contact with a heating element and deformed into a mushroom shape, for example (so-called "hot staking"). Alternatively it is also possible for the busbars to be snap-fitted to the respective locking element 43 or fastened in some other way.

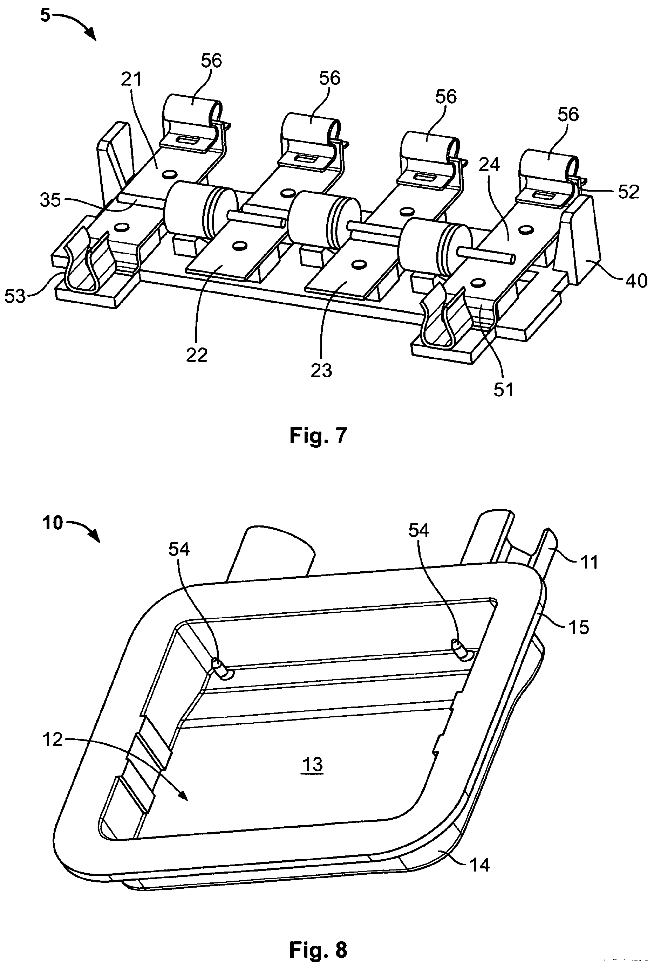

As is further illustrated in Figure 6, the first busbar 21 comprises a first contact zone 51 for connection with an external electrical conductor, for example of a connecting cable 2, as explained above, and a second contact zone 52, which is provided for connection with the electrical connection system of the solar module or with the foil conductor 3 thereof. In the present exemplary embodiment the busbar 21 is bent upwards in the second contact zone 52, such that a foil conductor of the electrical connection system of the solar module, which leads out of the multilayer arrangement of the solar module, may be applied to the upwardly bent portion within the contact zone 52. As described with reference to Figure 7, a foil conductor or the like is applied to the upwardly bent portion within the contact zone 52 and fixed to a spring element 56, which here takes the form of an Ω spring. The foil conductor of the connection system is not shown in Figures 6 and 7.

In addition, in the present embodiment the busbar 21 is extended and modified on one side in the contact zone 51 in such a way that contacting (plugging in and disconnection) is possible with a cable-side contact element. In the present embodiment the contact zone 51 of the busbar 21 comprises a mating contact 53, which may be connected to a contact element on the overhousing 10 or on a cable 2, as explained in greater detail below. The mating contact 53 takes the form in the present embodiment of a U-shaped contact, into which a corresponding pin contact may be introduced in the horizontal or vertical direction. The above explanations regarding the busbar 21 also apply in similar manner to the busbar 24, which is connected to an electrical conductor of a second connecting cable 2.

In addition to the busbar 21, a second busbar 22 is arranged substantially parallel to the first busbar 21, said busbar comprising a contact zone 52 for connection with a foil conductor 3 of the electrical connection system of the solar module. A diode component 31 comprises diode leads 35, which are fitted in each case to one of the busbars 21, 22 and are electrically connected to the respective busbar. In particular, one of the diode leads 35 is applied to the busbar 21 and connected electrically thereto, while the other opposing diode lead 35 of the diode 31 is applied to the second busbar 22 and electrically connected thereto. Thus, the first and second busbars 21, 22 are electrically connected together by way of the diode component 31. In addition to the busbar 22, a third busbar 23 and a fourth busbar 24 are each arranged substantially parallel to the busbars 21 and 22. Further diode components 32 and 33 are provided in a similar manner to the diode component 31, which further diode components 32 and 33 are fitted with their respective diode leads 35 in each case to one of the busbars 22 to 24 and are electrically connected to the respective busbar. For instance, the diode component 32 connects the busbars 22 and 23 together, while the diode component 33 connects the busbars 23 and 24 together. In the present embodiment, the diode components 31 to 33 take the form of round diodes, the respective diode body 36 being arranged between the busbars in each case connected together and extending in a space-saving manner in each case below and above the busbars. In this way, a space-saving arrangement of the busbars and diodes may be achieved.

The diode components 31 to 33 and the busbars 21 to 24 are arranged in such a way that the respective diode leads 35 lead substantially straight out of the respective diode component 31 to 33 and are also connected in this straight led-out manner to the respective busbar. To this end, the respective diode leads are inserted for example into correspondingly provided contact portions, for example in the form of grooves, and connected by welding or crimping to the respective busbar. According to this embodiment, it is not necessary to bend the diode leads for contacting with the respective busbars, for example in order to be inserted vertically into a respective busbar. Instead, the respective diodes may be simply inserted as delivered into a respective contact portion with straight diode leads and connected to the corresponding busbar. Through this arrangement and through the arrangement of the diode bodies 36 between the respective busbars 21 to 24, these current-carrying parts are arranged in an overall space-saving manner, such that the space taken up by the current-carrying parts may be reduced in the connector housing of the connecting device. In the embodiment according to Figures 6 and 7, the diode components 31 to 33 are extend lengthwise across the busbars 21 to 24, the respective diode body 36 being arranged between the corresponding busbars.

The functional unit 5 illustrated in Figure 7, which is delivered as is for example by a manufacturer of the connecting device (with or without an Ω spring 56), may be positioned with the support element 40 on a solar module. For positioning of the overhousing 10 over the functional unit 5, additional guide elements or centring elements may be provided, which are not shown in any greater detail in Figure 7. Alternatively, it is also possible for the diode components firstly to be welded to the busbars and for the resultant, preassembled unit then to be positioned on the support element 40, for example clipped therein or attached thereto by heat-shaping. To attach the support element 40 to the solar module, according to one embodiment an adhesive component is provided, for fixing the support element 40 to a certain degree to the solar module. For example, a double-sided adhesive tape may be used as the adhesive component.

As is additionally shown in Figure 8, contacts 54 are held in the overhousing 10 on a fastening element. In the present embodiment, the fastening element takes the form of the horizontal housing part 13 of the overhousing 10 or a corresponding other shaped portion on the overhousing 10. The contacts 54 are here shown as bent, in order to be contacted with the mating contact 53 on the functional unit 5. In another embodiment it is preferred, however, for the contacts 54 to take the form of straight pin contacts, which are pressed from above into the respective U-shaped mating contact 53 when the overhousing 10 is placed onto the solar module, such that they extend horizontally away from the busbars 21 and 24 in the direction of the respective connecting cable. When the overhousing 10 is placed onto the solar module, the functional unit 5 together with the support element 40 and busbars 21 to 24 are positioned in the opening 12 of the overhousing 10, such that in this position the edge 15 surrounds the support element 40 and the busbars 21 to 24. As described, in this production step the contacts 54 integrated in the overhousing 10, which may be straight or bent, are electrically connected to the respective busbar 21 or 24. The other ends of these contacts 54 project into the external plug-in connection of the plug-and-socket connecting device 19 (as illustrated schematically in Figure 2), which for example accommodates, locks in place and contacts a corresponding cable plug on the connecting cable 2.

Prior to positioning of the overhousing 10 onto the solar module, the edge 15 thereof is provided, on its underside and optionally on further relevant surfaces of the overhousing coming into contact with the solar module, with a suitable adhesive component or sealing component (cf. adhesive 107 according to Fig. 1), in particular a silicone-based sealing glue. After curing of the adhesive on the underside of the edge 15 after positioning of the overhousing 10 on the solar module, the electrically conductive parts inside the overhousing 10 are largely hermetically shielded against environmental influences and secured against being touched. Due to pre-fixing of the support element 40 on the solar module, for example by way of double-sided adhesive tape, the solar module with fitted connecting device 200 may in principle be stored and transported immediately even in a vertical position, since in this case the support element 40 assumes the pre-fixing function until the sealing glue applied to the edge 15 is appropriately cured. The adhesive component provided on the support element 40 should here exhibit such an adhesive force that at least the intrinsic weight of the connecting device 200 may be supported. As soon as curing has taken place, the overhousing 10 may fully assume its protective function and also absorb mechanical forces, which may possibly act on the connecting device 200 as a result of pulling on the connecting cable 2.

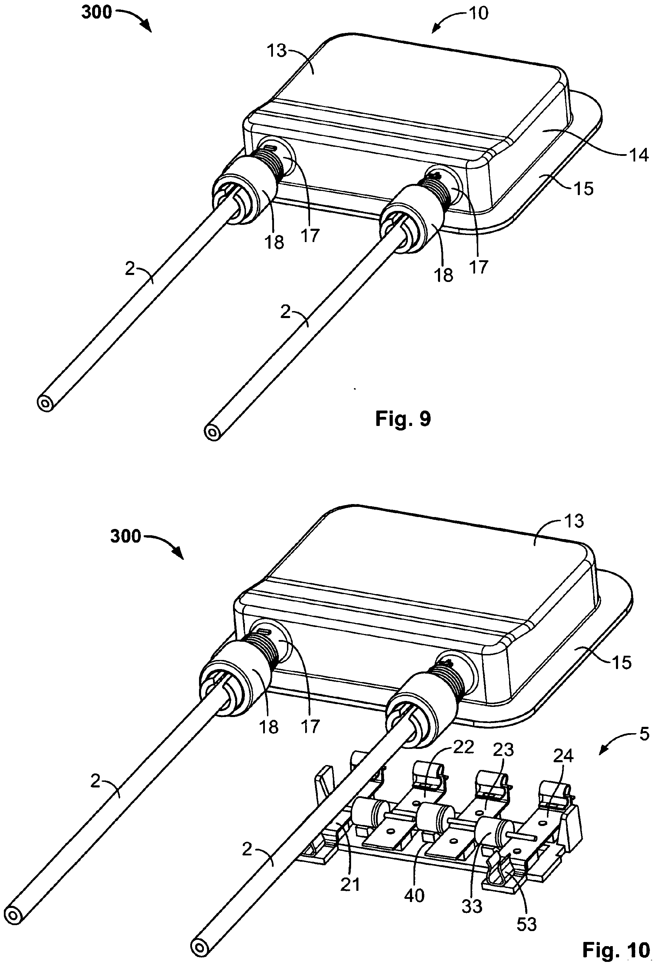

Figure 9 shows a perspective representation of a further embodiment of a connecting device 300 according to the invention. The connecting device 300 largely corresponds to the structure of the connecting device 200, as explained above with reference to Figures 2 to 8. In particular, the functional unit 5, which is arranged in the interior of the overhousing 10, corresponds to the functional unit 5 of the connecting device 200 according to Figures 2 to 8. Unlike the connecting device 200, the connecting device 300 comprises connection bushings 17 for the connecting cable 2 which differ from the connection bushings 11 as explained with reference to Figures 2 and 3. The connection bushings 17 are here configured in such a way that the connecting cable 2 may be attached to the overhousing 10 by means of a cable gland or another type of cable fastening. In the present embodiment the connection bushings 17 comprise a corresponding external thread, to which a respective cable gland 18 may be fitted, in order to connect a respective connecting cable 2 to the overhousing 10.

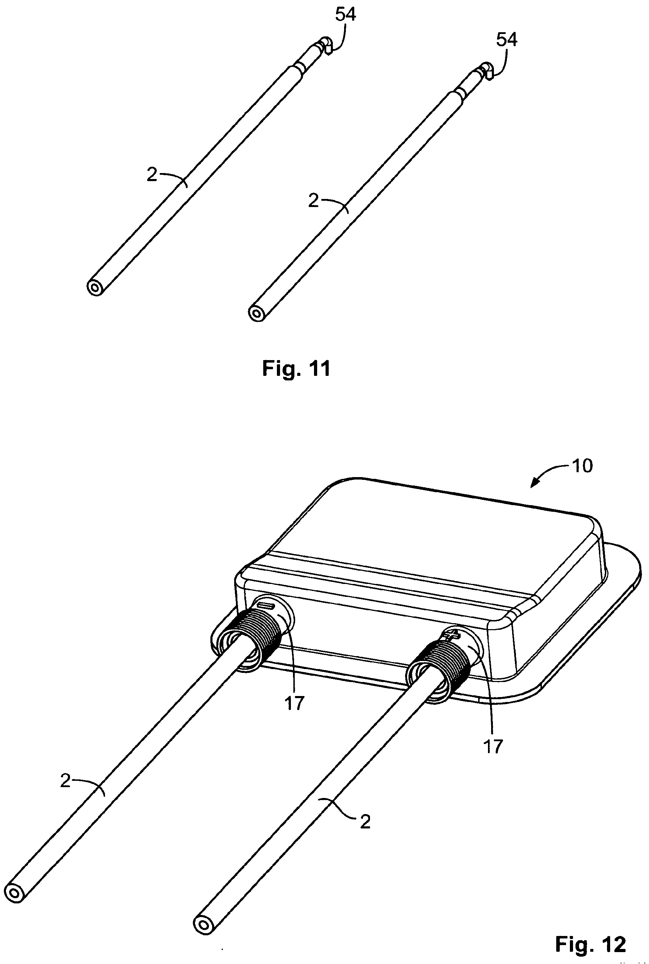

As is also shown in Figure 10, in this embodiment the connecting cable 2 is fitted to the overhousing 10 before the overhousing 10 is positioned over the support element 40 and placed onto the solar module. In the present exemplary embodiment, a contact 54 is arranged on an electrical conductor of the respective connecting cable 2, as shown in greater detail with reference to Figure 11. When the overhousing 10 is placed onto the solar module, the respective contact 54, which may be bent or straight, is introduced from above into the corresponding mating contact 53 on the functional unit 5, in a similar manner to the connecting device 200 according to Figures 2 to 8.

Figure 12 shows a further embodiment, according to which the cable 2 together with the fitted contacts 54 is subsequently introduced through the connection bushings 17 into the overhousing 10, in order to be connected to the corresponding mating contact 53 of the functional unit 5. In this case the contacts 54 in each case take the form of straight pin contacts, which are introduced horizontally into the respective mating contact 53. The embodiments of the contacts 53 and 54 as U-shaped contacts or pin contacts should be regarded merely as examples, it being in principle possible to provide any other type of plug-and-socket connection in this location. This also applies in a similar manner to the other embodiments of the connecting devices 200, 300 or 400. After introduction of the connecting cable 2 into the respective connection bushing 17, the connecting cables 2 are fixed on the overhousing 10 by means of corresponding cable glands, wherein the cable glands 18 according to Figures 9 and 10 may be used as cable glands.

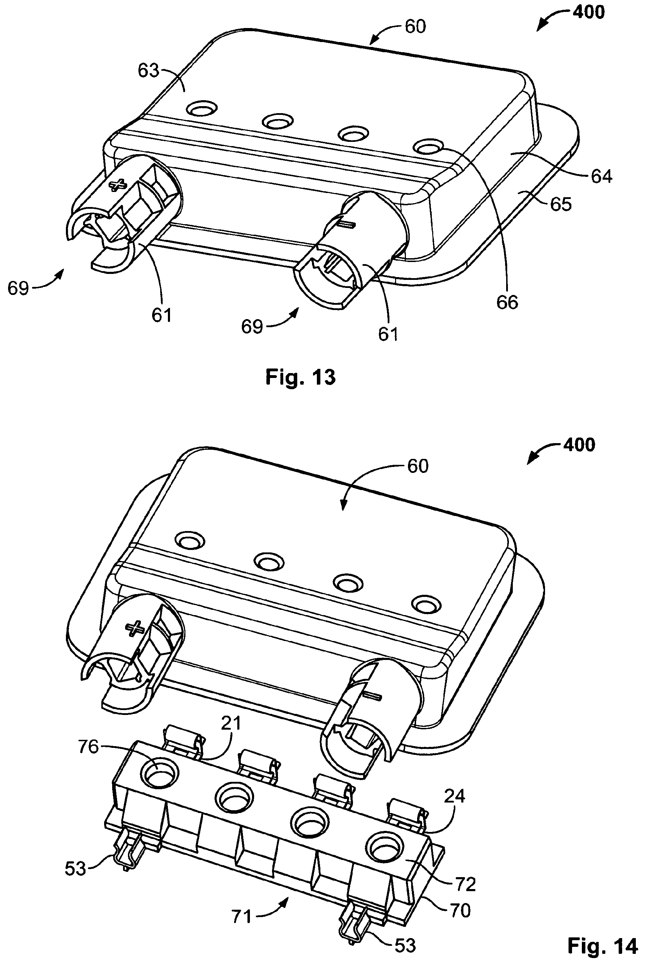

Fig. 13 shows a schematic perspective representation of a connecting device 400 according to the invention. The exploded representation according to Figure 14 shows the structure of the components used in this embodiment.

In a similar manner to the embodiments of connecting devices 200 and 300, as described above, in this embodiment too individually assembled busbars 21 to 24 are used, which are of identical or in principle similar construction to the busbars 21 to 24 of the connecting devices 200 and 300. In contrast, the support element 70 of the connecting device 400 is of different construction. In the present example, the support element 70 is formed of a plastics housing 72, which encloses at least part of the busbars 21 to 24 and at least one diode component, which connects two busbars together electrically, so forming a functional unit 5. If a plurality of busbars and a plurality of diode components are provided, the plastics housing accordingly encloses part of these busbars and the entirety of the diode components. With regard to the construction of the individual busbars 21 to 24 and the diode components 31 to 33, reference is made to the explanations provided in relation to Figures 2 to 8.

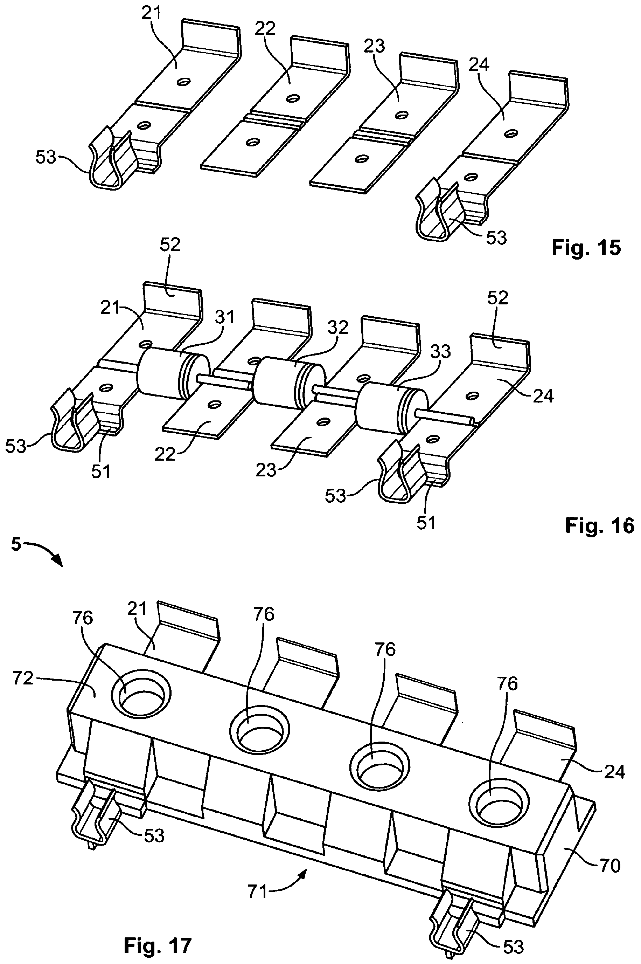

Production of a connecting device 400, as illustrated in Figure 13, is explained in greater detail below with reference to Figures 15 to 18.

First of all, the individual busbars 21 and 24 are positioned substantially parallel to one another in a suitable tool and connected to the diode components 31 to 33, as in Figure 16. The current-carrying parts arranged in this way are then encapsulated with plastics material by injection moulding or potting, such that at least part of the busbars 21 to 24 and the diode components 31 to 33 are surrounded by a common housing 72 formed of the plastics material, so forming a functional unit 5. In this way, a support element 70 is formed which comprises on its underside a bottom face 71, which serves as a bearing surface by way of which the support element 70 is placed onto the solar module. The diode components 31 to 33 arranged in a row next to one another are surrounded by the plastics housing 72, which lengthwise surrounds the diode components 31 to 33 and which extends lengthwise across the busbars 21 to 24. The plastics housing 72 may in principle adopt any suitable shape, for example it may also extend upwards between the busbars 21 to 24, such that the insulation distances between the busbars may be further reduced. Encapsulation by injection moulding or potting of the pre-assembled, current-carrying arrangement illustrated in Figure 16, results in a compact functional unit 5, as illustrated in Figure 17, which is comparatively simple to handle and displays a degree of mechanical stability. In this way, the functional unit 5 may be positioned in the overhousing 60 without risk of damage. The unit formed by the plastics housing 72 may in principle be replaced as a whole when servicing is required, i.e. in the event of failure of one or more of the diodes 31 to 33. This simplifies handling from the user's standpoint, in that only simply configured components have to be replaced.

In the case of partial shading of a solar installation, the bypass diodes 31 to 33 are activated, which may under certain circumstances become very hot. Encapsulation of the current-carrying components by injection moulding or potting to form a housing block, so forming the functional unit 5, results in improved heat dissipation, which has an overall positive effect on the performance of the connecting device. It is additionally possible to achieve the maximum possible degree of automation of parts manufacture, assembly and handling on the part of the user whilst maintaining the existing standard.

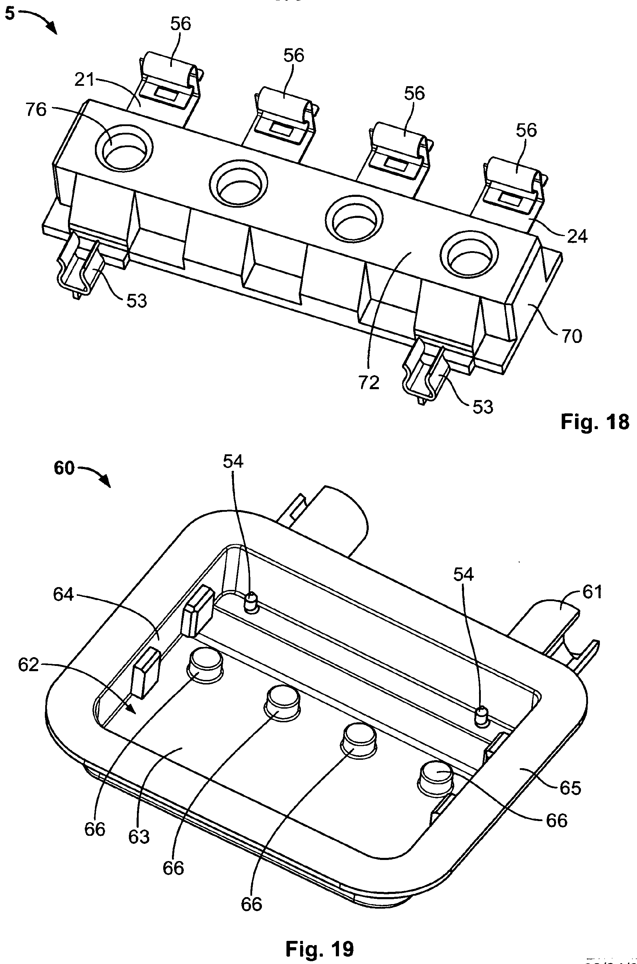

Figure 19 shows the underside of an overhousing 60, in the opening 62 of which the functional unit 5 according to Figure 18 is arranged. In a similar manner to the overhousing 10 of the connecting device 200, the overhousing 60 comprises a horizontal housing part 63 and a vertical housing part 64, which in the form of side walls joins the edge 65 surrounding the overhousing 60 to the horizontal housing part 63. In addition, connection bushings 61 are provided on the overhousing 60, which are identical in construction to the connection bushings 11 of the connecting device 200. Contacts 54 are accordingly arranged in the overhousing 60, which contacts 54 make contact with a respective mating contact 53 on the functional unit 5 when the overhousing 60 is positioned over the functional unit 5 onto the solar module. In this context, reference is made to the explanations made above in relation to the connecting devices 200 and 300.

In relation to the heat to be dissipated from the diode components, in the present exemplary embodiment the plastics housing 72 of the functional unit 5 comprises at least one well 76, which comes into contact with a corresponding raised portion 66 on the inside of the overhousing 60, more precisely on the inside of the horizontal housing part 63 of the overhousing 60, as is clear from viewing Figures 17 to 19 together. The wells 76 and raised portions 66 assist in improved heat dissipation to the outside of the connector housing. To achieve improved heat dissipation, the wells 76 in the plastics housing 72 are provided as close as possible to the heat source. The wells 76 are illustrated symbolically in the present exemplary embodiment by funnels. In this way, the housing surface of the plastics housing 72 is also enlarged, such that heat dissipation may be increased by an enlarged transitional surface. The raised portions 66 provided on the inside of the overhousing 60 correspond in extent and diameter to the wells 76. In this context it is also possible, instead of the wells 76 to provide corresponding raised portions on the plastics housing 72, which correspond with corresponding wells on the inside of the overhousing 60.

The wells 76 may, together with the raised portions 66 on the overhousing 60, also assume a guiding and centring function upon final assembly of the connecting device 400, wherein they allow perfectly fitting serving up and fastening of the overhousing 60. In this production process, the integral contacts 54 are also electrically connected to the corresponding mating contacts on the busbars 21 and 24 of the functional unit 5. The other ends of these contacts project in turn into an external plug-in connection, by means of which a corresponding connecting cable plug may be contacted, accommodated and locked in place. The overhousing 60 is fastened to a solar module in the same way as already explained above with reference to the overhousing 10 of the connecting devices 200 and 300. With regard to different cable connection variants, all those embodiments which have already been described in relation to the embodiments of Figures 2 to 12 are here also conceivable.

Prior to positioning of the overhousing 60, the foil conductors of the connection system of the solar module are attached to the respective busbars 21 to 24. To this end, Ω springs 56 are for example used, as shown in Figure 17, which are fitted onto the respective busbars 21 to 24. In this way, the foil conductors are connected detachably to the busbars. Detachable connection of the foil conductors may be effected by the user, for example in an automatable step by means of the Ω springs 56. The foil conductors may however also be fixedly contacted with the respective busbars 21 to 24 by soldering or welding. In this context, the invention offers the advantage that the foil conductors may be connected to the functional unit 5 or the busbars 21 to 24 in a situation in which the functional unit 5 is very readily accessible. This is a consequence of the fact that the functional unit 5 has not yet been arranged in a surrounding connector housing, but rather has merely been pre-fixed on the solar module by way of the underside of the support element 40 or 70. In this situation, the functional unit 5 is very readily accessible from all sides, such that the current-carrying parts may be contacted appropriately rapidly and easily. Upon fitting of the overhousing 10 or 60, rapid and reliable contact is again brought about on the cable connection side and in the same step a hermetic seal is achieved between the current-carrying parts and external environmental influences. If the connecting cable has already been fitted on the overhousing, assembly is concluded at this point. Otherwise, a connecting cable may be fastened to the overhousing by simple plug-in connection and connected to the current-carrying parts arranged therein.

Advantages of the invention are thus significantly reduced costs for producing a connecting device compared with the connection methods described in the introduction. Moreover, the number of components is reduced and the components are simplified, as are the steps for assembly thereof. In addition, the connecting device is structurally simplified, and savings are made in material and assembly costs.

## Claims

1. A connecting device (200, 300, 400) for connecting at least one external electrical conductor (2) to an electrical connection system (3, 104) of a photovoltaic solar module (100), comprising:
- a plurality of individually assembled busbars (21-24) arranged next to one another, comprising at least a first busbar (21) with a first contact zone (51) for connection to the electrical conductor (2) and a second contact zone (52) for connection to the electrical connection system (3) of the solar module (100), and a second busbar (22) with a contact zone (52) for connection to the electrical connection system (3) of the solar module (100),
- at least one support element (70), to which the busbars (21-24) are attached, and which comprises a bottom face (71) by way of which the support element may be arranged on the solar module (100) by being placed onto the solar module,
- an overhousing (10, 60) arrangeable separately from the support element, which overhousing (10, 60) may be arranged over the support element (70) and the busbars (21-24) and comprises at least one edge (15, 65) surrounding the support element and the busbars in this arrangement, which may be arranged on the solar module (100) by being placed onto the solar module and may be sealingly connected to the solar module,
- having at least one diode component (31) fitted onto the busbars (21, 22) and having diode leads (35), which are in each case fitted onto one of the busbars (21, 22) and connected to the respective busbar (21, 22), such that the first and second busbars are connected together via the diode component (31),
**characterized in that** the support element (70) is formed of a plastics housing (72), which encloses at least part of the busbars (21-24) and the diode component (31), so forming a functional unit (5), and
- the connecting device having at least one contact (54), which is configured in a first zone for connection with the first contact zone (51) of the first busbar (21) and which is configured in a second zone for connection with the external electrical conductor (2).

2. A connecting device according to claim 1, in which the contact (54) is held in the overhousing (10, 60) on a fastening element (13, 63).

3. A connecting device according to claim 1 or claim 2, in which the contact (54) takes the form of part of a plug-and-socket connection (19, 69), which is arranged between the first busbar (21) and the external electrical conductor (2), and in particular is part of a plug-and-socket device (19, 69) which is arranged on a connection bushing (61) of the overhousing, in order to cooperate with a corresponding plug-and-socket device on an external connecting cable (2).

4. A connecting device according to any one of claims 1 to 3, in which the first busbar (21) comprises a mating contact (53) in the first contact zone (51) or is connected with such a mating contact (53), which is in operative connection with the contact (54) in order to connect the external electrical conductor (2) to the first busbar.

5. A connecting device according to one of claims 1 to 4, in which at least part of the busbars (21, 22) and the diode component (31) are encapsulated in the plastics housing (72) by injection moulding or encapsulated in the plastics housing (72) by potting.

6. A connecting device according to one of claims 1 to 5, in which the plastics housing (72) comprises at least one well (76) or raised portion, which comes into contact with a corresponding raised portion (66) or well on the inside of the overhousing (60).

7. A connecting device according to claim 6, in which the well (76) or raised portion is formed on the plastics housing (72) in such a way that heat developed within the plastics housing is at least partly dissipated via the well (76) or raised portion on the plastics housing to the corresponding raised portion (66) or well on the overhousing (60).

8. A connecting device according to any one of claims 1 to 7, in which the diode component (31) is arranged in such a way that the diode leads (35) lead substantially straight out of the diode component (31) and are connected to the respective busbar (21, 22) in accordance with their length.

9. A connecting device according to any one of claims 1 to 8, in which the diode component (31) extends lengthwise across the first and second busbar (21, 22) and is arranged with its diode body (36) between the first and second busbar (21, 22), in particular with the diode body extending below and above the busbars.

10. A connecting device according to any one of claims 1 to 9, in which a plurality of diode components (31-33) are provided, in each case one of the diode components connecting two of the busbars (21-24) together electrically, - the diode components (31-33) are arranged in a row next to one another and the support element (70) is formed of a plastics housing (72), which lengthwise surrounds the diode components (31-33) and which extends lengthwise across the busbars (21-24).

11. A connecting device according to any one of claims 1 to 10, in which the support element (70) is joined by way of its bottom face (71) facing the solar module (100) to an adhesive component, in particular with a double-sided adhesive tape, which is designed to fix the support element to the solar module.

12. A solar module (100) having a connecting device (200, 300, 400) according to any one of the preceding claims which is fitted to a multilayer arrangement (101, 102, 103) having at least one solar cell (102) of the solar module and is connected to the connection system (3, 104) of the solar module.

13. A solar module according to claim 12, in which the overhousing (10, 60) rests by of its edge (15, 65) surrounding the support element and the busbars on an outer layer (103) of the solar module and is sealingly connected to the solar module (100) by means of an adhesive component or sealing component (107), which in particular comprises silicone.

## Patentansprüche

1. Verbindungsvorrichtung (200, 300, 400) zur Verbindung mindestens eines externen elektrischen Leiters (2) mit einem elektrischen Anschlusssystem (3, 104) eines photovoltaischen Solarmoduls (100), aufweisend:
- mehrere einzeln assemblierte und nebeneinander angeordnete Stromschienen (21-24), umfassend wenigstens eine erste Stromschiene (21) mit einem ersten Kontaktbereich (51) zur Verbindung mit dem elektrischen Leiter (2) und einem zweiten Kontaktbereich (52) zur Verbindung mit dem elektrischen Anschlusssystem (3) des Solarmoduls (100), und eine zweite Stromschiene (22) mit einem Kontaktbereich (52) zum Anschluss an das elektrische Anschlusssystem (3) des Solarmoduls (100),
- wenigstens ein Trägerelement (70), an dem die Stromschienen (21-24) befestigt sind und das eine Grundfläche (71) aufweist, an der das Trägerelement an dem Solarmodul (100) durch Auflage auf das Solarmodul anordenbar ist,
- ein vom Trägerelement getrennt anordenbares Übergehäuse (10, 60), welches über dem Trägerelement (70) und den Stromschienen (21-24) anordenbar ist und wenigstens einen in dieser Anordnung das Trägerelement und die Stromschienen umgebenden Rand (15, 65) aufweist, der an dem Solarmodul (100) durch Auflage auf das Solarmodul anordenbar ist und dichtend mit dem Solarmodul verbindbar ist,
- mit wenigstens einem auf die Stromschienen (21, 22) aufgebrachten Diodenbauelement (31) mit Diodenanschlussdrähten (35), die jeweils auf eine der Stromschienen (21, 22) aufgebracht und an der jeweiligen Stromschiene (21, 22) angeschlossen sind, so dass die erste und zweite Stromschiene über das Diodenbauelement (31) miteinander verbunden sind,
**dadurch gekennzeichnet, dass** das Trägerelement (70) durch ein Kunststoffgehäuse (72) gebildet ist, das wenigstens einen Teil der Stromschienen (21-24) und das Diodenbauelement (31) unter Bildung einer Funktionseinheit (5) umschließt, und
- dass die Verbindungsvorrichtung wenigstens einen Kontakt (54) aufweist, der in einem ersten Bereich zur Verbindung mit dem ersten Kontaktbereich (51) der ersten Stromschiene (21) ausgebildet ist und der in einem zweiten Bereich zur Verbindung mit dem externen elektrischen Leiter (2) ausgebildet ist.

2. Verbindungsvorrichtung nach Anspruch 1,
bei der der Kontakt (54) an einem Befestigungselement (13, 63) in dem Übergehäuse (10, 60) gehalten ist.

3. Verbindungsvorrichtung nach Anspruch 1 oder Anspruch 2,
bei der der Kontakt (54) als Teil einer Steckverbindung (19, 69) ausgebildet ist, die zwischen der ersten Stromschiene (21) und dem externen elektrischen Leiter (2) angeordnet ist, und insbesondere Teil einer Steckvorrichtung (19, 69) ist, die an einer Anschlussdurchführung (61) des Übergehäuses angeordnet ist, um mit einer korrespondierenden Steckvorrichtung an einem externen Anschlusskabel (2) zusammenzuwirken.

4. Verbindungsvorrichtung nach einem der Ansprüche 1 bis 3,
bei der die erste Stromschiene (21) in dem ersten Kontaktbereich (51) einen Gegenkontakt (53) aufweist oder mit einem solchen Gegenkontakt (53) verbunden ist, der mit dem Kontakt (54) in Wirkverbindung steht, um den externen elektrischen Leiter (2) mit der ersten Stromschiene zu verbinden.

5. Verbindungsvorrichtung nach einem der Ansprüche 1 bis 4,
bei der wenigstens ein Teil der Stromschienen (21, 22) und das Diodenbauelement (31) von dem Kunststoffgehäuse (72) umspritzt sind oder in das Kunststoffgehäuse (72) eingegossen sind.

6. Verbindungsvorrichtung nach einem der Ansprüche 1 bis 5,
bei der das Kunststoffgehäuse (72) wenigstens eine Vertiefung (76) oder Erhebung aufweist, die mit einer korrespondierenden Erhebung (66) bzw. Vertiefung an der Innenseite des Übergehäuses (60) in Kontakt tritt.

7. Verbindungsvorrichtung nach Anspruch 6,
bei der die Vertiefung (76) oder Erhebung am Kunststoffgehäuse (72) derart ausgebildet ist, dass innerhalb des Kunststoffgehäuses entwickelte Wärme über die Vertiefung (76) oder Erhebung am Kunststoffgehäuse an die korrespondierende Erhebung (66) bzw. Vertiefung am Übergehäuse (60) zumindest teilweise abgegeben wird.

8. Verbindungsvorrichtung nach einem der Ansprüche 1 bis 7,
bei der das Diodenbauelement (31) derart angeordnet ist, dass die Diodenanschlussdrähte (35) im Wesentlichen gerade aus dem Diodenbauelement (31) herausgeführt und ihrer Länge nach mit der jeweiligen Stromschiene (21, 22) verbunden sind.

9. Verbindungsvorrichtung nach einem der Ansprüche 1 bis 8,
bei der das Diodenbauelement (31) in seiner Längserstreckung quer zu der ersten und zweiten Stromschiene (21, 22) und mit seinem Diodenkörper (36) zwischen der ersten und zweiten Stromschiene (21, 22) angeordnet ist, insbesondere wobei sich der Diodenkörper nach unterhalb und oberhalb der Stromschienen erstreckt.

10. Verbindungsvorrichtung nach einem der Ansprüche 1 bis 9,
bei der mehrere Diodenbauelemente (31-33) vorgesehen sind, wobei jeweils eines der Diodenbauelemente zwei der Stromschienen (21-24) elektrisch miteinander verbindet, bei der die Diodenbauelemente (31-33) in einer Reihe nebeneinander angeordnet sind und das Trägerelement (70) durch ein Kunststoffgehäuse (72) gebildet ist, das in seiner Längserstreckung die Diodenbauelemente (31-33) umgibt und sich in seiner Längsrichtung quer über die Stromschienen (21-24) erstreckt.

11. Verbindungsvorrichtung nach einem der Ansprüche 1 bis 10,
bei der das Trägerelement (70) an seiner dem Solarmodul (100) zugewandten Grundfläche (41, 71) mit einer Klebstoffkomponente, insbesondere mit einem doppelseitigen Klebeband, verbunden ist, welche dazu ausgebildet ist, das Trägerelement an dem Solarmodul festzulegen.

12. Solarmodul (100) mit einer Verbindungsvorrichtung (200, 300, 400) nach einem der vorhergehenden Ansprüche, die an einer Schichtenanordnung (101, 102, 103) mit wenigstens einer Solarzelle (102) des Solarmoduls angebracht ist und mit dem Anschlusssystem (3, 104) des Solarmoduls verbunden ist.

13. Solarmodul nach Anspruch 12,
bei dem das Übergehäuse (10, 60) an seinem das Trägerelement und die Stromschienen umgebenden Rand (15, 65) an einer äußeren Schicht (103) des Solarmoduls aufliegt und mittels einer Klebstoffkomponente oder Dichtkomponente (107), welche insbesondere Silikon aufweist, dichtend mit dem Solarmodul (100) verbunden ist.

## Revendications

1. Dispositif de connexion (200, 300, 400) pour la connexion d'au moins un conducteur électrique externe (2) à un système de connexion électrique (3, 104) d'un panneau solaire photovoltaïque (100), comprenant :
- plusieurs barres collectrices assemblées de manière individuelle (21-24) qui sont disposées les unes à côté des autres, comprenant au moins une première barre collectrice (21) comprenant une première zone de contact (51) à des fins de connexion au conducteur électrique (2) et une deuxième zone de contact (52) à des fins de connexion au système de connexion électrique (3) du panneau solaire (100), et une deuxième barre collectrice (22) comprenant une zone de contact (52) à des fins de connexion au système de connexion électrique (3) du panneau solaire (100) ;
- au moins un élément faisant office de support (70) auquel sont fixées les barres collectrices (21-24), et qui comprend une face inférieure (71) à l'aide de laquelle l'élément faisant office de support peut être disposé sur le panneau solaire (100) en venant se placer sur le panneau solaire ;
- un recouvrement (10, 60) qui peut être disposé séparément par rapport à l'élément faisant office de support, ledit recouvrement (10, 60) pouvant venir se disposer par-dessus l'élément faisant office de support (70) et les barres collectrices (21-24), et comprenant au moins un bord (15, 65) qui entoure l'élément faisant office de support et les barres collectrices dans cette disposition, qui peut venir se disposer sur le panneau solaire (100) en venant se placer sur le panneau solaire et qui peut être relié en étanchéité au panneau solaire ;
- possédant au moins un composant (31) faisant office de diode qui vient se placer sur les barres collectrices (21, 22) et possédant des bornes de diode (35) qui viennent se disposer dans chaque cas sur une des barres collectrices (21, 22) et qui sont reliées à la barre collectrice respective (21, 22) de manière telle que la première et la deuxième barre collectrice sont reliées l'une à l'autre via le composant 31 faisant office de diode (31) ;
- **caractérisé en ce que** l'élément faisant office de support (70) est réalisé sous la forme d'un boîtier en matière plastique (72) qui renferme au moins une partie des barres collectrices (21-24) et le composant (31) faisant office de diode, pour ainsi obtenir une unité fonctionnelle (5) ; et
- le dispositif de connexion possède au moins un contact (54) qui est configuré dans une première zone à des fins de connexion avec la première zone de contact (51) de la première barre collectrice (21) et qui est configuré dans une deuxième zone à des fins de connexion avec le conducteur électrique externe (2).

2. Dispositif de connexion selon la revendication 1, dans lequel le contact (54) est maintenu dans le recouvrement (10, 60) sur un élément de fixation (13, 63).

3. Dispositif de connexion selon la revendication 1 ou 2, dans lequel le contact (54) prend la forme d'une partie d'une connexion à contacts mâles et femelles (19, 69), qui est disposée entre la première barre collectrice (21) et le conducteur électrique externe (2), et en particulier fait partie d'une connexion à contacts mâles et femelles (19, 69), qui est disposée sur un manchon de connexion (61) du recouvrement dans le but de coopérer avec un dispositif correspondant à contacts mâles et femelles sur un câble de connexion externe (2).

4. Dispositif de connexion selon l'une quelconque des revendications 1 à 3, dans lequel la première barre collectrice (21) comprend un contact homologue (53) dans la première zone de contact (51) ou est connectée avec un tel contact homologue (53) qui établit une connexion opérationnelle avec le contact (54) dans le but de connecter le conducteur électrique externe (2) à la première barre collectrice.

5. Dispositif de connexion selon l'une quelconque des revendications 1 à 4, dans lequel au moins une partie des barres collectrices (21, 22) et le composant (31) faisant office de diode sont encapsulés dans le boîtier en matière plastique (72) via un moulage par injection ou sont encapsulés dans le boîtier en matière plastique (72) par enrobage.

6. Dispositif de connexion selon l'une quelconque des revendications 1 à 5, dans lequel le boîtier en matière plastique (72) comprend au moins un puits (76) ou une portion surélevée qui entre en contact avec une portion surélevée correspondante (66) ou un puits correspondant à l'intérieur du recouvrement (60).

7. Dispositif de connexion selon la revendication 6, dans lequel le puits (76) ou la portion surélevée est réalisé sur le boîtier en matière plastique (72) de manière telle que la chaleur qui se dégage au sein du boîtier en matière plastique, est dissipée au moins en partie via le puits (76) ou via la portion surélevée sur le boîtier en matière plastique en direction de la portion surélevée correspondante (66) ou du puits correspondant sur le recouvrement (60).

8. Dispositif de connexion selon l'une quelconque des revendications 1 à 7, dans lequel le composant (31) faisant office de diode est disposé d'une manière telle que les bornes de diode (35) ressortent essentiellement en ligne droite du composant (31) faisant office de diode et sont connectées à la barre collectrice respective (21, 22) en fonction de leur longueur.

9. Dispositif de connexion selon l'une quelconque des revendications 1 à 8, dans lequel le composant (31) faisant office de diode s'étend en direction longitudinale à travers la première et la deuxième barre collectrice (21, 22) et vient se disposer avec son corps de diode (36) entre la première et la deuxième barre collectrice (21, 22), en particulier de manière telle que le corps de diode s'étend en dessous et au-dessus des barres collectrices.

10. Dispositif de connexion selon l'une quelconque des revendications 1 à 9, dans lequel on prévoit plusieurs composants (31-33) faisant office de diodes - dans chaque cas, un des composants faisant office de diodes connectant deux des barres collectrices (21-24) l'une à l'autre par voie électrique -, les composants faisant office de diodes (31-33) étant disposés en une rangée les uns à côté des autres et l'élément faisant office de support (70) étant constitué d'un boîtier en matière plastique (72) qui entoure en direction longitudinale les composants faisant office de diodes (31-33) et qui s'étend en direction longitudinale à travers les barres collectrices (21-24).

11. Dispositif de connexion selon l'une quelconque des revendications 1 à 10, dans lequel l'élément faisant office de support (70) est joint par le biais de sa face inférieure (71), opposée au panneau solaire (100), à un composant faisant office d'adhésif, en particulier avec un ruban adhésif double face qui est conçu pour fixer l'élément faisant office de support au panneau solaire.

12. Panneau solaire (100) possédant un dispositif de connexion (200, 300, 400) selon l'une quelconque des revendications précédentes, qui est appliqué sur un arrangement multicouche (101, 102, 103) possédant au moins une pile photovoltaïque (102) du panneau solaire, et qui est connecté au système de connexion (3, 104) du panneau solaire.

13. Panneau solaire selon la revendication 12, dans lequel le recouvrement (10, 60) s'appuie, via son bord (15, 65) qui entoure l'élément faisant office de support et les barres collectrices, sur une couche externe (103) du panneau solaire et est relié dans des conditions d'étanchéité au panneau solaire (100) au moyen d'un composant faisant office d'adhésif ou d'un composant faisant office de joint d'étanchéité (107), qui comprend en particulier de la silicone.
